Europäisches Patentamt

(19) European Patent Office

Office européen des brevets

(11) Veröffentlichungsnummer: **0 016 859**
A1

# (12) EUROPÄISCHE PATENTANMELDUNG

(21) Anmeldenummer: 79104672.5

(22) Anmeldetag: 24.11.79

(51) Int. Cl.³: **B 29 D 27/00,** B 29 D 27/04

(30) Priorität: 05.04.79 IT 8493179

(43) Veröffentlichungstag der Anmeldung: 15.10.80
Patentblatt 80/21

(84) Benannte Vertragsstaaten: DE

(71) Anmelder: L'ISOLANTE S.N.C. di Toffoli Trevisani & C.,,
Via Strada Quistello, CAP 37060 Mozzecane (IT)

(72) Erfinder: Toffoli, Constantino, Via Strada Quistello,
CAP 37060 Mozzecane (IT)

(74) Vertreter: Buchner, Otto, Dr. et al, Patentanwälte
Dipl.-Ing. Klaus Westphal Dr. rer. nat. Bernd Mussgnug
Dr. rer. nat. Otto Buchner Flossmannstrasse 30a,
D-8000 München 60 (DE)

(54) Verfahren zum homogenen Sintern von Formteilen aus geschäumtem Polystyrol, Vorrichtung zur Durchführung dieses Verfahrens und durch das Verfahren hergestelltes Formteil.

(57) Vorgeschäumte Perlen aus geschäumtem Polystyrol werden in eine Form oder einen Tunnel eingespeist und darin mittels eines Heizfluids verschweißt. Erfindungsgemäß wird das Heizfluid für das Verschweißen der Perlen in der Masse der Perlen aus dem Inneren dieser Masse selbst verbreitet. Zum Einleiten des Heizfluids dient mindestens eine ins Innere der Masse von Polystyrolperlen ragende Sonde (14) mit Austrittsöffnungen (20) für das Austreten des Heizfluids.

EP 0 016 859 A1

0016859

Dipl. Ing. Klaus Westphal

Dr. rer. nat. Bernd Mussgnug

Dr. rer. nat. Otto Buchner

PATENTANWÄLTE

Seb.-Kneipp-Strasse 14

D-7730 VS-VILLINGEN

Flossmannstrasse 30 a

D-8000 MÜNCHEN 60

Telefon 07721 - 55343
Telegr. Westbuch Villingen
Telex    5213177 webu d

Telefon 089 - 832446
Telegr. Westbuch München
Telex    5213177 webu d

U.Z.: 896.1

L'ISOLANTE S.n.c. di Toffoli, Trevisani & C.,
Via Strada Quistello, CAP 37060 Mozzecane,
Italien

## VERFAHREN ZUM HOMOGENEN SINTERN VON FORMTEILEN AUS GESCHÄUMTEM POLYSTYROL, VORRICHTUNG ZUR DURCHFÜHRUNG DIESES VERFAHRENS UND DURCH DAS VERFAHREN HERGESTELLTER FORMTEIL

Die Erfindung betrifft ein Verfahren für das gleichmäßige Sintern von Formteilen aus geschäumtem Polystyrol mit den Phasen des Vorschäumens und der Reifung der Perlen, der Einspeisung und des Verschweißens derselben in einer Form oder in einem Tunnel mittels eines Heizfluids, eine Vorrichtung zur Durchführung dieses Verfahrens sowie einen durch das Verfahren hergestellten Formteil.

Bei einem bekannten Verfahren dieser Art wird ein Heizfluid verwendet, das durch in den Wänden der Form oder des Tunnels vorgesehene Öffnungen eindringt, wobei die Wände auch mit Öffnungen für das Entweichen der Luft aus der Masse der Perlen und des flüssigen oder gasförmigen Fluids während der Endphase des Verschäumens der Perlen versehen sind.

- 2 -

Postscheckkonto: Karlsruhe 76979-754  Bankkonto: Deutsche Bank AG Villingen (BLZ 69470039) 146332

Das genannte Heizfluid, Luft, Dampf und dergleichen, dessen
Druck unter einer Atmosphäre liegt, wird von der Außenoberfläche der Perlenmasse zum Innenbereich dieser Masse hin verbreitet, wobei das Verhältnis zwischen Eintrittsöffnungen und
äußerer Oberfläche der zu sinternden Masse ein weitgehendes
Bestreichen dieser Oberfläche ermöglicht.

Der Austritt des flüssigen oder gasförmigen Fluids während
der Endphase des Verschäumens der Perlen erfolgt durch Austrittsöffnungen und auch durch die Öffnungen, die zum Einleiten des Heizfluids gedient haben.

Das bekannte Verfahren weist einige Nachteile auf. Insbesondere
ist die Produktion auf Formteile mit begrenzten Abmessungen
eingeschränkt, über die hinaus kein befriedigendes Sintern im
Innenbereich der Formteile zu erzielen ist. Der Durchdringungskoeffizient des Heizfluids sinkt nämlich auf umso geringere
Werte ab, je größer die Dicke der Perlenmasse ist, weshalb jenseits bestimmter Werte das Sintern des Innenbereichs der Perlenmasse alles andere als zufriedenstellend ist und die so erhaltenen Formteile einen beträchtlichen Mangel an Sinterhomogenität aufweisen.

Ein weiterer Nachteil des bekannten Verfahrens liegt darin,
daß eine besonders lange Zyklusdauer erforderlich ist, die auf
die zuvor erwähnten Phasen des Einleitens und Entweichens zurückzuführen ist. Ein weiterer Nachteil liegt in dem Aufheizen der
Wände der Form oder des Tunnels in den entsprechenden Bereichen,
wobei diese Wände wegen ihrer hohen Wärmeaufnahme den Einsatz
einer beträchtlichen Menge von Heizfluid erfordern, die sich
besonders stark auf den Energieverbrauch und die Zyklusdauer
auswirkt.

Aufgabe der Erfindung ist es, ein homogenes Sintern von
Perlenmassen aus vorgeschäumtem Polystyrol, auch wenn deren

- 3 -

Dicke beträchtlich ist, bei geringerem Energieverbrauch und wesentlich kürzerer Zykluszeit, als dies bei den bekannten Verfahren möglich ist, zu erzielen.

Diese Aufgabe wird erfindungsgemäß dadurch gelöst, daß das Heizfluid für das Verschweißen der Perlen in der Masse der Perlen aus dem Inneren dieser Masse selbst verbreitet wird.

Ferner betrifft die Erfindung eine Vorrichtung zur Durchführung dieses Verfahrens, die sich dadurch auszeichnet, daß die Einleiteinrichtungen für das Heizfluid in mindestens einer Sonde mit Austrittsöffnungen für das Austreten des Heizfluids im Inneren der Masse aus Polystyrolperlen innerhalb der Form bzw. des Tunnelabschnitts enden.

Schließlich erstreckt sich die Erfindung auch auf einen nach dem erfindungsgemäßen Verfahren hergestellten Formteil.

In den Unteransprüchen sind vorteilhafte Ausgestaltungen der Erfindung unter Schutz gestellt.

Anhand der Figuren werden zwei Ausführungsbeispiele der erfindungsgemäßen Vorrichtung näher erläutert. Es zeigt:

Fig. 1    einen schematischen Querschnitt entlang der in Längsrichtung verlaufenden Mittelachse einer ersten Ausführungsform der erfindungsgemäßen Vorrichtung,

Fig. 2    einen Schnitt längs der Linie II-II in Fig. 1,

Fig. 3    einen der Fig. 1 entsprechenden schematischen Schnitt durch eine zweite Ausführungsform der erfindungsgemäßen Vorrichtung,

Fig. 4    einen Schnitt längs der Linie IV-IV in Fig. 3 und

Fig. 5    einen vergrößerten Querschnitt einer erfindungsgemäßen Sonde, wobei der Schnitt durch die Achsen einer Reihe von Austrittsöffnungen gelegt ist.

- 4 -

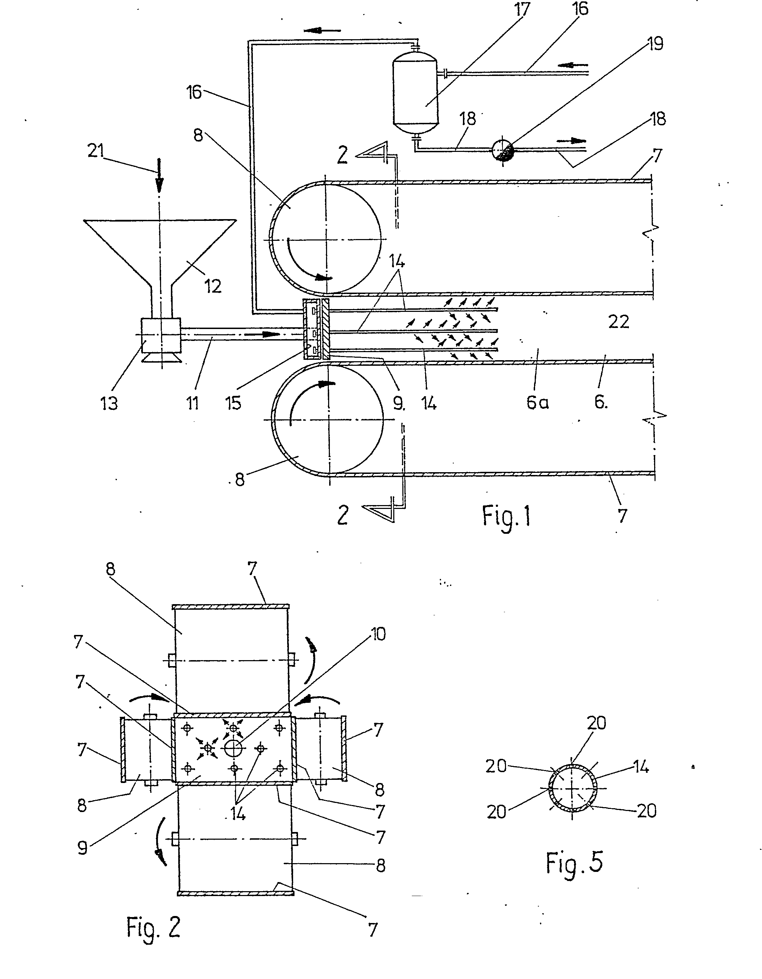

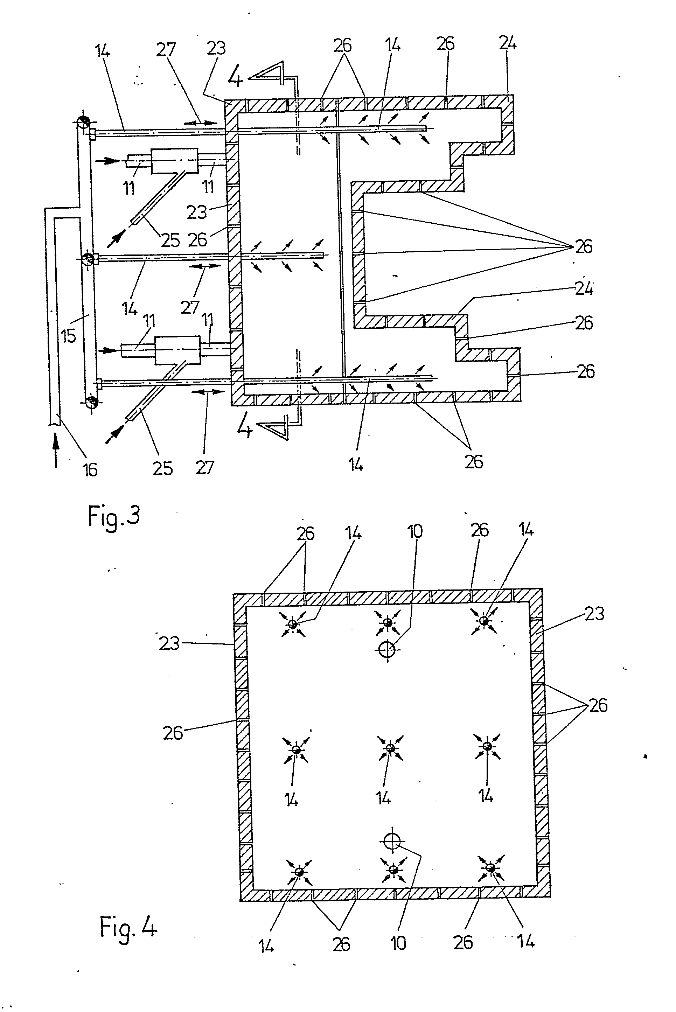

Berücksichtigt man, daß gleichen Bezugsziffern in den Figuren gleiche oder gleichwertige Teile entsprechen, so ist in den Figuren 1 und 2 zu erkennen, daß ein teilweise unterbrochener Tunnel 6 von vier Endlosbändern 7 aus Stahlgeflecht, die auf Antriebsrollen 8 laufen, begrenzt ist.

Auch wenn dies in den Zeichnungen nicht dargestellt ist, ist es selbstverständlich, daß zahlreiche Gleitrollen außerhalb des Tunnels die Endlosbänder 7 längs der Strecke des Tunnels 6 führen, auch um Querschnittserweiterungen des Tunnels während der Endphase des Schäumens der Polystyrolperlen zu verhindern.

Der Tunnel 6 ist an seinem einen Ende durch eine Platte 9 mit einer Mittelbohrung 10 verschlossen, in die die Rohrleitung 11 einmündet, die zur Einspeisung der Perlen aus vorgeschäumtem Polystyrol aus einem Beschickungstrichter 12 mittels einer Pumpe 13 und anderer nicht dargestellter Fördermittel dient.

Hohlzylindrische Sonden 14 ragen mit ihrem einen Ende in den Tunnel 6 hinein, sind mit der Platte 9 fest verbunden und ragen mit ihrem anderen Ende in eine Kammer 15 zur Verteilung von Dampf hinein, der in diese Kammer durch eine Rohrleitung 16 eingeleitet wird. Die Rohrleitung 16 ist mit einem nicht dargestellten Dampferzeuger verbunden, wobei ein Kondenswasserausscheider 17 in die Leitung 16 geschaltet ist, an den eine Ablaßleitung 18 und ein Regler 19 angeschlossen sind.

Die Sonden 14 sind, wie in Figur 5 zu erkennen ist, mit Austrittsöffnungen 20 für den Dampf versehen, und zwar in der Weise, daß die Dampfstrahlen in vorbestimmte und zweckmäßig gewählte Richtungen gelenkt werden.

Die Perlen aus vorgeschäumtem Polystyrol werden in einem nicht dargestellten Silo zur Reife gebracht und in Richtung des Pfeiles 21 in den Trichter 12 eingespeist, aus dem sie über die Pumpe 13 und die Rohrleitung 11 in den Teil des Tunnels 6 eingeleitet werden, der zwischen der Platte 9 und einem Stopfen 6 a, der
beispielsweise aus geschäumtem Polystyrol bestehen kann, eingeleitet werden, bis dieser Teil des Tunnels ganz gefüllt ist;
danach werden die Antriebsrollen 8 in Bewegung versetzt und
Dampf durch die Sonden 14 eingeleitet.

Der eingeleitete Dampf bewirkt das Entweichen der Luft aus
der Perlenmasse durch die Maschen der Bänder 7, während durch
das Erwärmen der Perlen deren Endverschäumung beginnt, wobei
Pentan frei wird, das ebenfalls durch die Maschen der Bänder 7
zum Entweichen gebracht wird, während diese die im Verschäumen
befindliche Perlenmasse in der Richtung des Pfeils 22 weiterbewegen,
was zur Folge hat, daß die Perlen miteinander verschweißen und
der Stopfen 6 a mit dem in Produktion befindlichen Formstück
verschweißt.

Es ist klar, daß die Vorschubgeschwindigkeit der Bänder 7, die
kontinuierliche Einspeisung der Perlenmenge in den Tunnel 6
und die aus den Sonden 14 austretende Dampfmenge so berechnet
sind, daß eine kontinuierliche Produktion des Formstücks erzielt wird, das an dem nicht dargestellten offenen Ende des
Tunnels 6 austritt, wo Geräte für das Schneiden, die Fertigbearbeitung und die Verpackung der Formteile angeordnet sind.

Es muß beachtet werden, daß der aus den Sonden 14 austretende
Dampf sich unmittelbar im Inneren der Perlenmasse ausbreitet,
während das Aufheizen der Wände des Tunnels 6 auf das unbedingt nötige Maß beschränkt bleibt.

Außerdem ist klar, daß der Durchdringungskoeffizient des Dampfes
in der Perlenmasse nicht von der Dicke dieser Masse abhängt,
da es möglich ist, die Anzahl der Sonden in Abhängigkeit von
der Dicke der Perlenmasse zu erhöhen. Auf diese Weise erhält
man eine gleichmäßige und fast gleichzeitige Erwärmung der
gesamten Perlenmasse in einer sehr kurzen Zeit, was ein gleichmäßiges Sintern des Formteils unabhängig von seiner Dicke ermöglicht.

Der Einsatz des Dampfes ist auf die Mindestmengen beschränkt, die erforderlich sind, um eine gute Versinterung zu erzielen, da nach dem erfindungsgemäßen Verfahren nach dem Verschäumen keine Phase der Dekompression und der Abkühlung mit Druckluft und Wasser erforderlich ist, wie dies bei den bekannten Verfahren weitgehend der Fall ist.

Praktische Versuche haben bewiesen, daß der aus den Sonden 14 austretende Dampf einen Druck von etwa 5 at aufweisen kann, der Dampfverbrauch etwa 1/5 der Menge ausmacht, die nach dem herkömmlichen Verfahren erforderlich war, und daß die Zyklusdauer bei gleichen Abmessungen des Formstücks um etwa 40 % verkürzt wird.

Die Erfindung weist daher zusätzlich zu dem Vorteil, die Fertigung von Formteilen mit Dicken zu ermöglichen, die mit den bekannten Verfahren nicht erzielbar waren, den Vorteil auf, die Qualität des hergestellten Erzeugnisses zu verbessern und die Energiekosten und Produktionszeiten erheblich zu senken.

Unter Bezugnahme auf die Figuren 3 und 4 ist zu erkennen, daß die aus zwei Teilen 23-24 bestehende Form mit vorgeschäumten Perlen, die in einem nicht dargestellten Silo bereits zur Reife gebracht wurden, durch die Bohrung 10 und die Rohrleitung 11 mit Hilfe der Luftdüsen 25 gefüllt wird.

Sonden 14 leiten in ähnlicher Weise, wie dies in Bezug auf die Figuren 1 und 2 ausgeführt wurde, durch die Rohrleitung 16 und die Verteilerkammer 15 Dampf in die Perlenmasse ein, wobei die in der Perlenmasse vorhandene Luft durch die Austrittsöffnungen 26 zum Entweichen gebracht wird.

Sobald die Einleitung der erforderlichen Dampfmenge beendet ist, werden die Sonden 14 aus der Form herausgezogen, während bei den Perlen die Endphase des Verschäumens mit dem sich hieraus ergebenden Verschweißen derselben beginnt.

Beim Öffnen der Form und Herausnehmen des Formteils stellt
man fest, daß das Ergebnis völlig dem vergleichbar ist, das
in Bezug auf die Figuren 1 und 2 beschrieben wurde.

Unter Bezugsnahme auf die Figuren 3 und 4 ist zu bemerken,
daß das Einführen der Sonden 14 in die Form 23-24 und ihr Herausziehen in der Richtung der Pfeile 27 erfolgt, es ist jedoch
klar, daß das gleiche Ergebnis zu erzielen ist, wenn nur die
Form 23-24 bewegt wird oder wenn Sonden und Form gegeneinander
beweglich sind.

Außerdem ist klar, daß die Sonden 14 auch im Falle der Figuren
1 und 2 beweglich angeordnet sein können, ohne daß deshalb die
Erfindung in ihren wesentlichen Merkmalen verändert wird.

Die Sonden 14 können untereinander unterschiedliche Querschnitte
aufweisen und einzeln herausziehbar sein, ohne daß Hohlräume in
den hergestellten Formstücken verbleiben.

Außerdem können an jeder der Sonden 14 unterschiedlich angeordnete Dampfaustrittsöffnungen vorgesehen sein, wie auch
die Relativbewegungen der Sonden untereinander unterschiedlich
sein können, um Formteile von besonderer Formgebung, jedoch
mit einer einheitlichen Sinterung des gesamten Formteils zu
erzielen.

PATENTANSPRÜCHE

1. Verfahren für das gleichmäßige Sintern von Formteilen aus geschäumtem Polystyrol mit den Phasen des Vorschäumens und der Reifung der Perlen, der Einspeisung und des Verschweißens derselben in einer Form oder in einem Tunnel mittels eines Heizfluids, dadurch gekennzeichnet, daß das Heizfluid für das Verschweißen der Perlen in der Masse der Perlen aus dem Inneren dieser Masse selbst verbreitet wird.

2. Verfahren nach Anspruch 1, dadurch gekennzeichnet, daß das Heizfluid aus unter Druck stehendem Dampf besteht.

3. Verfahren nach Anspruch 1, dadurch gekennzeichnet, daß das Heizfluid aus überhitzter Druckluft besteht.

4. Vorrichtung zur Durchführung des Verfahrens nach Anspruch 1, mit einem Beschickungstrichter, der aus einem Silo für das Vorschäumen und Reifen von Polystyrolperlen beschickt wird, mindestens einer Form oder eines Tunnelabschnitts, die bzw. der mit den Perlen mittels Einfülleinrichtungen befüllbar ist sowie Erzeugungs- und Einleiteinrichtungen für erhitztes Druckfluid in die Form bzw. den Tunnelabschnitt, dadurch gekennzeichnet, daß die Einleiteinrichtungen (15,16) für das Heizfluid in mindestens einer Sonde (14) mit Austrittsöffnungen (20) für das Austreten des Heizfluids im Inneren der Masse aus Polystyrolperlen innerhalb der Form (23,24) bzw. des Tunnelabschnitts (6) enden.

5. Vorrichtung nach Anspruch 4, dadurch gekennzeichnet, daß mindestens eine der Wände der Form (23,24) bzw. des Tunnelabschnitts (6) mit Bohrungen (26) für den Austritt des flüssigen und/oder gasförmigen Heizfluids versehen ist.

6. Vorrichtung nach Anspruch 4 oder 5, dadurch gekennzeichnet, daß die Erzeugungseinrichtungen aus einem normalen Kessel und die Einleiteinrichtungen wenigstens aus Rohrleitungen (16) für ein unter Druck stehendes Fluid bestehen.

7. Vorrichtung nach einem der Ansprüche 4 bis 6, dadurch gekennzeichnet, daß die Einfülleinrichtungen aus Rohrleitungen (11) und mindestens einer Pumpe und/oder Druckluftdüsen (25) bestehen.

8. Vorrichtung nach einem der Ansprüche 4 bis 7, dadurch gekennzeichnet, daß die genannte Sonde bzw. Sonden (14) und die Form (23,24) bzw. der Tunnelabschnitt (6) relativ zueinander beweglich sind.

9. Vorrichtung nach einem der Ansprüche 4 bis 8, dadurch gekennzeichnet, daß die Seitenwände des Tunnels (6) aus vier Endlosbändern (7) aus geflochtenem Stahl bestehen, die auf Antriebsrollen (8) und Gleitrollen laufen.

10. Formteil aus homogen gesintertem geschäumtem Polystyrol, der durch das Verfahren nach einem der Ansprüche 1 bis 3 hergestellt ist.

0016859

Fig.1

Fig. 2

Fig.5

2/2

0016859

Fig.3

Fig. 4

0016859

Europäisches
Patentamt

**EUROPÄISCHER RECHERCHENBERICHT**

Nummer der Anmeldung

EP 79 10 4672

| | EINSCHLÄGIGE DOKUMENTE | | KLASSIFIKATION DER ANMELDUNG (Int.Cl. 3) |
|---|---|---|---|
| **Kategorie** | Kennzeichnung des Dokuments mit Angabe, soweit erforderlich, der maßgeblichen Teile | betrifft Anspruch | B 29 D 27/00 27/04 |
| X | US - A - 3 178 768 (EDBERG) <br> * Spalte 4, Zeilen 56-73; Spalte 5, Zeilen 57-65; Spalte 7, Zeile 29; Abbildungen 1,4-6 * | 1,2,4-6,10 | |
| | -- | | |
| X | DE - A - 2 551 333 (GULLFIBER) <br> * Seite 9, Absatz 1; Abbildungen 1,2 * | 1,2,4-6,10 | |
| | -- | | |
| X | DE - B - 1 176 834 (MOLLER) <br> * Spalte 3, Zeilen 30-37,42; Abbildungen 3,4 * | 1-8,10 | **RECHERCHIERTE SACHGEBIETE (Int. Cl. 3)** <br><br> B 29 D 27/00 |
| | -- | | |
| X | GB - A - 1 128 326 (FOLEY PACKAGING AND ISOLATION) <br> * Seite 3, Zeilen 55-59; Abbildungen 6-8 * | 1,2,4-6,8,10 | |
| | -- | | |
| X | DE - B - 1 223 141 (EDBERG) <br> * Abbildung 1 * | 1,2,4,6,8,10 | |
| | -- | | |
| X | FR - A - 1 551 168 (CODIREP) <br> * Abbildungen 1-3 * | 1,2,4,6,8,10 | **KATEGORIE DER GENANNTEN DOKUMENTE** |
| | -- | | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |
| A | DE - A - 2 226 416 (ARMONIES) <br> * Abbildungen 1,2 * | 1 | |
| | -- | | |
| A | US - A - 3 545 042 (BROZENICK) <br> * Abbildung * | 1 | |
| | ---- | | |

| | | | |
|---|---|---|---|
| ✗ | Der vorliegende Recherchenbericht wurde für alle Patentansprüche erstellt. | | |
| **Recherchenort:** Den Haag | **Abschlußdatum der Recherche** 07-07-1980 | | **Prüfer** SCHMIDL |

EPA form 1503.1 06.78